# EUROPEAN PATENT SPECIFICATION

(11) **EP 0 587 574 B1**
(45) Date of publication and mention of the grant of the patent: **08.01.1997**
(21) Application number: 92907251.0
(22) Date of filing: 01.04.1992
(51) Int. Cl.: B29C 45/48

(54) **PLASTICIZING UNIT FOR SCREW INJECTION MOULDING MACHINES**
WEICHMACHUNGSEINHEIT FÜR SCHNECKENSPRITZGIESSVORRICHTUNGEN
ORGANE DE PLASTIFICATION POUR MACHINE A INJECTION A VIS

(43) Date of publication of application: 23.03.1994
(73) Proprietor: FRENKEL C-D AKTIENGESELLSCHAFT, FL-9490 Vaduz (LI)
(72) Inventor: MEYER, Paul, CH-6612 Ascona (CH)
(74) Representative: Makovski, Priscilla Mary
(86) International application number: PCT/EP92/00741
(87) International publication number: WO 93/19923

(56) References cited:
- EP-A- 0 199 823
- EP-A- 0 340 873
- DE-A- 3 622 974
- GB-B- 1 585 531
- GB-B- 1 585 532
- Patent Abstracts of Japan, Vol 10, No 257, M513, abstract of JP 61- 84221, publ 1986-04-28 (NISSAN MOTOR CO LTD)
- Derwent's abstract, No. 88-359 093/50, SU 1 399 151, publ. week 8850 (KHMELNITSKI TERMOPL)
- Patent Abstracts of Japan, Vol 10, No 242, M509, abstract of JP 61- 72512, publ 1986-04-14 (JAPAN STEEL WORKS LTD)
- Patent Abstracts of Japan, Vol 9, No 275, M426, abstract of JP 60-120024, publ 1985-06-27 (KIYOSHI TAKAHASHI)

## Description

This invention relates to plasticizing units for screw injection moulding machines.

Injection moulding machines for plastics and rubbers or visco-elastic materials generally are known, in which what is essentially a single screw extruder has a reservoir formed in its cylindrical barrel in front of the screw and in which the screw, which is movable axially as well as rotatably, serves to fill this reservoir and, upon being pushed backwards to a preset point, then serves as a piston in a positionally triggered fast forward movement to inject the contents of the reservoir into the mould. This was first patented as DE 858 310, upon which the preamble of claim 1 is based. A non-return valve at the tip of the screw is introduced in some constructions to enhance its injection-action, though at the expense of some additional dead space. This simplest plasticizing unit, featuring basically a straight-through path along the axis of the screw, has the drawback that the axial motion of the screw may not exceed about 4xD (D= screw diameter) in order not to have too short a length of the barrel in which the screw performs what plasticizing action it is capable of. In other words, the shot-volume is severely limited, size for size of the screw- and barrel-diameter.

To ameliorate this difficulty, two developments are known. In the first, the extruder fills up a reservoir situated in front of its outlet opening, within a cylindrical housing in which the complete plasticizing unit (cylinder + screw + inlet) can be moved as a piston. In the second, the extruder and reservoir are on separate centre-lines and thus entirely separate but for a valved connection, where these centre-lines may intersect, at the outlet of the extruder and leading to the injection reservoir which is provided with a piston for the actual injection.

Both of these developments, while usable for larger shot-volumes, result in much greater mechanical, driving and control-difficulties and, especially the cylinder/piston version is said to present difficulties in setting the desired shot volume as exactly as is possible with the simple screw-ram device.

Moreover, all three types generally have plain transport screws and provide the plasticizing action mainly by heat transfer from the barrel. As the practice of injection-moulding has become more sophisticated, the demands on the uniformity of the plasticized material have increased, so that now non-uniformities in the different batches of what is ostensibly the same compound have shown negative effects in the moulded products.

Accordingly, there is now a demand for a mixing-homogenizing action in the plasticizing units.

Furthermore, if two chemically different compounds could be introduced into the extruder and continuously mixed therein so completely as to form a very fast, and possibly lower temperature-reacting compound, the cycle times in the moulds could be reduced materially. This would yield considerable improvements in productivity.

Some aims of the invention for the simplest plasticizing unit of an injection moulding machine where the ram action is carried out by the screw itself, are to eliminate the need for a non-return valve on the screw tip, and thereby the dead volume caused by the valve; to maintain the same effective plasticizing length of the screw irrespective of the preset shot volume, - i.e. to overcome the limitation on the mould filling stroke, $\text{s < 4xD}$; to provide improved accuracy of shot volume control both for large and particularly also for small shot volumes; to provide a mixing-homogenizing action together with more uniform plasticization which is adjustable to fit different requirements; and to provide a mixing-action adequate for the blending of two components which, on account of their chemistry, together provide a much faster vulcanisation possibly also at lower temperature, and thus moulding cycle times, than is possible for a single component compound on account of the need for storage and handling.

According to the present invention a plasticizing unit for an injection moulding machine comprises a cylindrical barrel and a cylindrical screw mounted in the barrel for axial and rotary movement, the unit having an inlet for material in the barrel, a compression zone, a plasticizing zone for mixing and plasticizing the material by rotation of the screw, a reservoir chamber in the barrel for plasticized material, the reservoir chamber having a shaped end and a channel for connection to a mould of the machine, the screw being axially movable to eject material from the reservoir chamber, and trigger means for setting off the injection action and stopping rotation of the screw when the reservoir chamber is full, and in which the plasticizing zone is of the Transfermix type, in which the helical groove of the screw varies in cross-section from full area to zero area, and the barrel has a helical groove of which the cross-sectional area varies from zero area to full area, whereby the material is transferred from the screw to the barrel while being mixed and plasticized; the unit has a return zone between the plasticizing zone and the reservoir chamber, in which the flow area in the barrel groove reduces from full area to zero area for the material to be returned to within the cylindrical interface of the barrel and to the reservoir chamber, and the screw has a part where its helical groove is of zero area, the part acting as a piston in the cylindrical reservoir chamber for the injection action.

The Transfermix type of plasticizing zone is well-known from GB-A-842 962, GB-A-888 864, GB-A-1 585 531 and GB-A-1 585 532, but hitherto the Transfermix screw has not been used for providing the injection action.

It is a feature of a Transfermix plasticizing zone that its action may be intensified by throttling the flow of material through it. The throttle in this invention is formed by a cylindrical space in the return zone between the end of the Transfermix zone, where the grooves in the barrel have zero depth, and the position on the screw where its grooves also have zero depth, where through the axial position of the screw for its plasticizing action the cylindrical space through which the material passes from the barrel grooves into the reservoir chamber may be adjusted to anything between a full opening - equal to the full cross-sectional area of the grooves in the barrel - and practically zero. The setting of the axial position of the screw is effected by positioning-means preferably integrated into the means providing for the axial motion of the injection-stroke.

In order to provide for the feature of adjustability of the shot-volume which in most cases will be required in practice, in a preferred embodiment the screw has a central cylindrical core which is axially movable relative to it, whereby with the screw in its axial position for plasticizing, the position of the core is adjustable to define a shot-volume between a minimum of the annular space with the core fully extended through the cylindrical reservoir chamber in the barrel and touching the outlet-end, and a maximum with the core fully retracted, equal to the full cylindrical reservoir chamber. The core may be adapted to actuate a trigger-means for setting off the injection-action of the screw as soon as the material, having filled the preset shot-volume, starts to push the core from its preset position backwards into the screw.

The core and the screw are provided with joining means which act to move the core forward with the screw as one body as soon as the head of the screw in its forward injection motion reaches the head of the core. The head of the screw and that of the core may be formed to present one continuous surface which may be shaped to exactly fit the exit of the reservoir chamber, in order to allow substantially no head space with the screw forward. Alternatively the trigger means may be a pressure-sensor fitted in the reservoir chamber and reacting directly to an increased pressure exerted by the material after having filled the preset shot-volume, in order to eliminate any motion of the core from its preset position prior to injection commencing and thereby to provide extreme accuracy in the shot-volume.

In another preferred embodiment, the head of the core may be left adjacent to the outlet-end of the barrel, thereby forming a valve preventing a back-flow. Moreover, in that position it may be adapted to exert a positive pressure on the material in the mould and to maintain such pressure for a period. In such an embodiment, after completion of the shot, the screw only will be withdrawn into its plasticizing position and will then start rotating for its next plasticizing action, filling up the annular space between the barrel and the core. After a timed delay, the core will be moved back to assume its pre-set position for the next shot. On account of the proven superior plasticising efficiency of the Transfermix geometry, the screw-lengths for plasticization need not be increased over the conventional, but may rather be reduced, enabling existing presses to be adapted by fitting the above units.

With the Transfermix being capable of operating at higher screw speeds than usual in conventional plasticizing screws without causing excessive temperatures, relatively short screw lengths become possible, so that bigger diameter screws with bigger cores can be used also for smaller shot volumes and cycle-times, insofar as they depend on the time required to fill the reservoir, e.g. in carousel arrangements, can be reduced accordingly.

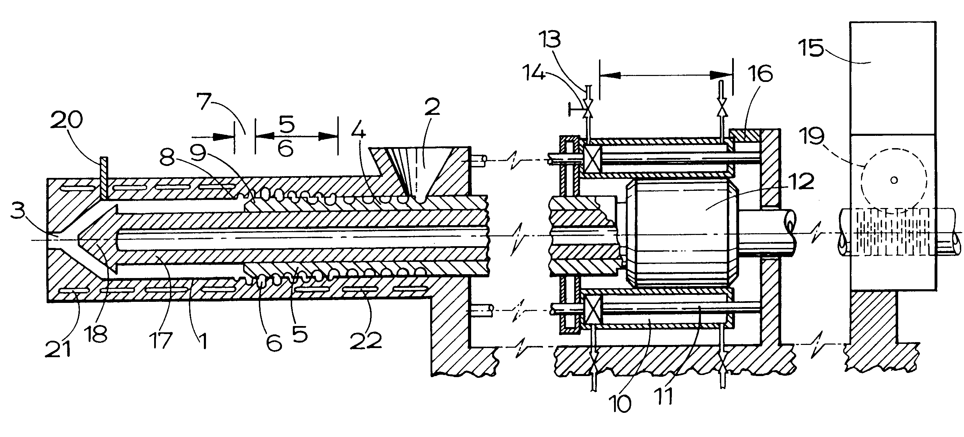

The invention will now be described by way of example and in some detail with reference to the accompanying drawing in which the single figure is a cross-section through a plasticizing unit according to this invention.

In the figure, the plasticizing unit comprises a cylindrical barrel 1, in which a cylindrical screw 4 is rotatably and axially movable. The barrel 1 has a feed-opening 2 and an exit-opening 3 which leads to the mould (not shown). The screw 4 includes a compression section and a Transfermix plasticising section 5 and is shown in its withdrawn position in which with the plasticizing section 6 in the barrel it forms a transfer-zone. In this, as the cross-sectional area of the helical grooves in the screw reduce from full area to zero, the cross-sections of opposite-handed helical grooves of the barrel increase from zero to full area. On rotation of the screw 4, its contents, while being plasticized and mixed, are transferred into the barrel. Following this is a return section 7 of the barrel in which the cross-sectional area of the helical barrel-grooves again reduces to zero, and in which the compound is moved into a reservoir chamber in front of the screw through the cylindrical space formed between a forward edge 8 of the section 7 and a piston-edge 9 formed on the screw 4 where its helical grooves have reduced to zero. The axial length of the cylindrical space can be altered by adjusting the axial position of the screw in the withdrawn position, between zero, with the screw fully forward and the full length of section 7, with the screw in the retracted position shown. The adjustable cylindrical space therefore acts as a throttle for the Transfermix plasticizing section.

Generally, the axial position of the screw 4 is determined by hydraulic cylinders 10 which are mounted on robust guide-rods 11 and are connected via a motor 12 (generally a hydraulic motor) for rotating the screw and via suitable bearings, to the said screw 4.

The hydraulic cylinders 10 are actuated via hoses 13 and valves 14, which themselves are controlled by electronics in a control cabinet 15. A sensor-means 16 connected to the control-cabinet 15 provides a pre-settable plasticizing position for the rotor such that the cylindrical throttle-space has an opening suitable to the compound having to be plasticized, between fully open, as indicated on the drawing, and almost closed, in which case the screw will be further forward than shown.

The screw 4 is provided with a central bore in which a core 17 is mounted so as to be axially adjustable relative to the screw. This is in order to define the shot-volume, between a minimum value equal to the annular space between core 17 and the interior of barrel 1 when the core 17 is in a fully extended position relative to screw 4 and a maximum value equal to the full reservoir-space in the barrel when the core 17 is withdrawn into the screw 4.

The core 17 has an enlarged end 18, of which the front surface fits exactly into the interior shape of the barrel outlet 3 and the rear surface fits exactly onto the front of the screw 4. This avoids dead space on injection.

The position of core 17 is determined by a positioning means 19 which is adjustable by the operator via the electronics in cabinet 15. Near the barrel-outlet 3 is shown a pressure-sensor 20, also connected to the electronic control, for setting off the injection stroke when the pressure increases on the reservoir being full. The barrel has passages for temperature-control at 21 and the screw indirectly through the core 17, likewise at 22.

In operation, compound generally in the form of feed strip, though possibly in the form of pellets, is fed into feed-opening 2, taken up by the screw 4 and plasticized in the Transfermix-section 5 - 6, the intensity of the plasticizing/homogenizing action being controlled by the setting of the throttle space. In the nowadays frequent case of processor control, the temperature, screw-speed, throttle-setting and the shot-volume will be part of a programme, which is also able to take into account the influence of the throttle-position on the total reservoir-space and work out the position of rod 17 accordingly. When the plasticized compound has filled the preset shot-volume, a back-pressure is exerted in the reservoir and is sensed by the sensor 20 which sets off, also as part of the programme, the hydraulic forward movement of the screw which, after passing the edge 8 in the barrel, acts completely as a ram or piston. As part of the programme, screw rotation may then be stopped and likewise the preset hydraulic force appropriate to the moulding task will apply.

Unless working on maximum shot-volume, the screw/ram will contact the rear surface of the head 18 of the core 17, carrying this forward to the end of the injection-stroke. The combined surface of the screw/ram end and of the head 18 is shaped so as to fit the interior of the outlet-end of the barrel, so that there will be no dead space.

The electronic programme may provide for the core 17 with its head 18 to remain in the forward position while the screw is withdrawn to start plasticization for the next shot and to assume the programmed position for the next shot-volume when some of the reservoir-space has already been filled.

## Claims

1. A plasticizing unit for an injection moulding machine comprising a cylindrical barrel (1) and a cylindrical screw (4) mounted in the barrel (1) for axial and rotary movement, the unit having an inlet (2) for material in the barrel (1), a compression zone, a plasticizing zone (5, 6) for mixing and plasticizing the material by rotation of the screw (4), a reservoir chamber in the barrel for plasticized material, the reservoir chamber having a shaped end and a channel (3) for connection to a mould of the machine, the screw (4) being axially movable to eject material from the reservoir chamber, and trigger means (20) for setting off the injection action and stopping rotation of the screw (4) when the reservoir chamber is full, characterised in that the plasticizing zone (5, 6) is of the Transfermix type, in which the helical groove of the screw (4) varies in cross-section from full area to zero area, and the barrel (1) has a helical groove of which the cross-sectional area varies from zero area to full area, whereby the material is transferred from the screw (4) to the barrel (1) while being mixed and plasticized; the unit has a return zone (7) between the plasticizing zone (5, 6) and the reservoir chamber, in which the flow area in the barrel groove reduces from full area to zero area for the material to be returned to within the cylindrical interface of the barrel (1) and to the reservoir chamber, and the screw (4) has a part (9) where its helical groove is of zero area, the part (9) acting as a piston in the cylindrical reservoir chamber for the injection action.

2. A plasticising unit according to claim 1, including means (10, 15, 16) for adjusting the axial position of the screw (4) in its plasticizing position, whereby the length of a cylindrical space in the return zone by which the material passes from the barrel-grooves into the reservoir chamber may be adjusted to anything between a full opening - equal to the full cross-sectional area of the barrel-grooves - and practically zero, thereby providing a throttle for the said Transfermix plasticizing zone.

3. A plasticizing unit according to claim 2, in which the means (10, 15, 16) for setting of the axial position of the screw (4) during the plasticizing action is integrated into the means providing for the axial motion of the screw (4) in the injection-stroke.

4. A plasticizing unit according to any of the preceding claims, in which the screw (4) has a central cylindrical core (17) which is axially movable relative to it, and means (19) for adjusting the position of the core (17) relative to the screw (4) to define a shot-volume between a minimum of the annular space with the core (17) fully extended through the cylindrical reservoir chamber in the barrel (1) and touching the outlet-end, and a maximum with the core (17) fully retreated, equal to the full reservoir chamber.

5. A plasticizing unit according to claim 4, in which the core (17) is provided with an enlarged head (18) shaped to fit into the outlet-end of the reservoir chamber,

6. A plasticizing unit according to claim 5, in which the head (18) of the core (17) and the screw (4) are provided with joining means which act to move the core (17) forward with the screw (4) as one body as soon as the front of the screw (4) in its forward injection motion reaches the head (18) of the core (17).

7. A plasticizing unit according to claim 5, in which the head of the screw (14) and the head (18) of the core (17) when moving forward in the injection stroke are shaped to form one continuous surface which substantially fits the outlet end of the reservoir chamber, in order to allow substantially no dead space with the screw (4) forward.

8. A plasticizing unit according to any of the preceding claims, including a pressure-sensor (20) fitted in the reservoir chamber for reacting directly to an increased pressure exerted by the material after having filled the preset shot-volume, to set off the injection motion of the screw (4), in order to eliminate any motion of the core (17) from its preset position prior to injection commencing and thereby to provide accuracy in the shot-volume.

## Patentansprüche

1. Plastifiziereinheit für eine Spritzgußmaschine umfassend eine zylindrische Kammer (1) und eine zylindrische Schnecke (4), die in der Kammer (1) axial- und drehbeweglich angeordnet ist, wobei die Einheit in der Kammer (1) einen Einlaß (2) für Material umfaßt, eine Kompressionszone, eine Plastifizierungszone (5, 6) zum Mischen und Weichmachen des Materials durch Drehung der Schnecke (4) umfaßt, eine Reservoirkammer in der Kammer für weichgemachtes Material enthält, wobei die Reservoirkammer ein geformtes Ende und einen Kanal (3) zur Verbindung mit einer Form der Maschine enthält, wobei die Schnecke (4) axial beweglich ist, um Material aus der Reservoirkammer zu ejizieren, und eine Auslöseeinrichtung (20) zum Abschalten des Injektionsvorgangs und Stoppen der Drehung der Schnecke, wenn die Reservoirkammer gefüllt ist, umfasst
dadurch gekennzeichnet,
daß die Plastifizierungszone (5, 6) vom Transvermixtyp ist, bei welchem die spiralförmige Furche der Schnecke (4) sich im Querschnitt von einer vollständigen Fläche zu einer Null-Fläche ändert, und wobei die Kammer (1) eine spiralförmige Furche hat, deren Querschnittsfläche sich von einer Null-Fläche bis zur vollen Fläche ändert, wobei das Material von der Schnecke (4) zur Kammer (1) transportiert wird, während dieses gemischt und weichgemacht wird, wobei die Einheit eine Rückkehrzone (7) zwischen der Plastifizierungszone (5, 6) und der Reservoirkammer aufweist, in welcher sich die Strömungsfläche in der Furche der Kammer von einer vollen Fläche zu einer Null-Fläche für das Material, das zur zylindrischen Grenzfläche der Kammer (1) und zur Reservoirkammer zurückzutransportieren wird, ändert, und wobei die Schnecke (4) einen Teil (9) aufweist, wo deren spiralförmige Furche eine Null-Fläche hat, wobei der Teil (9) als Kolben in der zylindrischen Reservoirkammer für den Injektionsvorgang dient.

2. Plastifiziereinheit nach Anspruch 1, umfassend eine Einrichtung (10, 15, 16) zum Einstellen der axialen Stellung der Schnecke (4) in deren weichmachenden Stellung, wobei die Länge eines zylindrischen Raums in der Rückkehrzone, durch welche das Material von den Kammerfurchen in die Reservoirkammer tritt, einstellbar ist auf einen beliebigen Wert zwischen einer vollständigen Öffnung - gleich der vollständigen Querschnittsfläche der Kammerfurchen - und im wesentlichen Null, wobei eine Drossel für die weichmachende Transvermixzone bereitgestellt ist.

3. Plastifiziereinheit nach Anspruch 2, bei welcher die Einrichtung (10, 15, 16) für das Einstellen der axialen Stellung der Schnecke (4) während des Weichmachvorgangs in die Einrichtung integriert ist, welche die Axialbewegung der Schnecke (4) beim Injektionshub bereitstellt.

4. Plastifiziereinheit nach einer der vorstehenden Ansprüche, in welcher die Schnecke (4) einen mittigen zylindrischen Kern (17) aufweist, der relativ zu dieser axial beweglich ist, und eine Einrichtung (19) zum Einstellen der Stellung des Kerns (17) relativ zur Schnecke (4), um ein Schußvolumen zu definieren zwischen einem Minimum, bei welchem sich der Kern (17) vollständig durch die zylindrische Reservoirkammer in der Kammer (1) erstreckt und das Auslaßende berühr, und einem Maximum, bei welchem der Kern (17) vollständig zurückgezogen ist, gleich der vollen Reservoirkammer.

5. Plastifiziereinheit nach Anspruch 4, bei welcher der Kern (17) mit einem vergrößerten Kopf (18) bereitgestellt ist, dessen Form in das Auslaßende der Reservoirkammer paßt.

6. Plastifizereinheit nach Anspruch 5, bei welcher der Kopf (18) des Kerns (17) und die Schnecke (4) mit einer Verbindungseinrichtung bereitgestellt sind, welche den Kern (17) mit der Schnecke (4), im wesentlichen wie ein Körper bewegen kann, sobald die Vorderseite der Schnecke in ihrer Vorwärtsinjektionsbewegung den Kopf (18) des Kerns (17) erreicht.

7. Plastifiziereinheit nach Anspruch 5, bei welcher der Kopf der Schnecke (14) und der Kopf (18) des Kerns (17) bei der Vorwärtsbewegung während des Injektionshubs so geformt sind, daß sich eine im wesentlichen kontinuierliche Oberfläche ergibt, die im wesentlichen zu dem Auslaßende der Reservoirkammer paßt, um im wesentlichen keinen Freiraum vorwärts der Schnecke (4) zurückzulassen.

8. Plastifizereinheit nach einem der vorstehenden Ansprüche, umfassend einen Drucksensor (20), der in die Reservoirkammer eingepaßt ist, um direkt auf einen erhöhten Druck zu reagieren, der durch das Material nach Füllen des vorgegebenen Schußvolumens aufgebracht wird, um die Injektionsbewegung der Schnecke (4) abzuschalten, um irgendeine Bewegung des Kerns (17) aus seiner vorgegebenen Stellung vor dem Injektionsbeginn zu vermeiden und hierdurch Exaktheit des Schußvolumens bereitzustellen.

## Revendications

1. Unité de plastification pour une machine de moulage par injection comportant un pot cylindrique (1) et une vis cylindrique (4) installée dans le pot (1) pour un mouvement axial et rotatif, l'unité comportant une entrée (2) pour le matériau dans le pot (1), une zone de compression, une zone de plastification (5, 6) pour mélanger et plastifier le matériau par la rotation de la vis (4), une enceinte formant réservoir dans le pot pour le matériau plastifié, l'enceinte formant réservoir comportant une extrémité configurée et un canal (3) pour la connection à un moule de la machine, la vis (4) étant axialement déplaçable pour éjecter du matériau de l'enceinte formant réservoir, et un moyen de déclenchement (20) pour faire démarrer l'action d'injection et pour arrêter la rotation de la vis (4) lorsque l'enceinte formant réservoir est pleine, caractérisée en ce que la zone de plastification (5, 6) est du type Transfermix, où la rainure hélicoïdale de la vis (4) varie en section transversale d'une zone pleine à une zone zéro, et le pot (1) présente une rainure hélicoïdale dont la zone en section transversale varie de la zone zéro à la zone pleine par quoi le matériau est transféré de la vis (4) au pot (1) pendant qu'il est mélangé et plastifié ; l'unité comporte une zone de retour (7) entre la zone de plastification (5, 6) et l'enceinte formant réservoir où la zone d'écoulement dans la rainure de pot diminue de la zone pleine à la zone zéro pour le matériau à ramener dans l'interface cylindrique du pot (1) et de l'enceinte formant réservoir, et la vis (4) comporte une partie (9) dont la rainure hélicoïdale a une zone zéro, la partie (9) agissant comme piston dans l'enceinte cylindrique formant réservoir pour l'action d'injection.

2. Unité de plastification selon la revendication 1, incluant des moyens (10, 15, 16) pour régler la position axiale de la vis (4) dans sa position de plastification par quoi la longueur d'un espace cylindrique dans la zone de retour par laquelle le matériau passe des rainures de pot dans l'enceinte formant réservoir peut être réglée à n'importe quelle valeur comprise entre une ouverture totale - égale à la zone complète en section transversale des rainures de pot - et pratiquement zéro, en réalisant ainsi un étranglement pour ladite zone de plastification Transfermix.

3. Unité de plastification selon la revendication 2, dans laquelle les moyens (10, 15, 16) pour régler la position axiale de la vis (4) pendant l'action de plastification sont intégrés dans le moyen réalisant le mouvement axial de la vis (4) pendant la course d'injection.

4. Unité de plastification selon l'une des revendications précédentes, dans laquelle la vis (4) a un noyau cylindrique central (17) qui est axialement déplaçable relativement à celle-ci, et un moyen (19) pour régler la position du noyau (17) relativement à la vis (4) pour définir une charge d'injection entre un minimum de l'espace annulaire avec le noyau (17) entièrement étendu à travers la chambre cylindrique formant réservoir dans le pot (1) et touchant l'extrémité de sortie, et un maximum où le noyau (17) est entièrement rétracté, égal à l'enceinte formant réservoir pleine.

5. Unité de plastification selon la revendication 4, dans laquelle le noyau (17) présente une tête agrandie (18) configurée pour s'adapter dans l'extrémité de sortie de l'enceinte formant réservoir.

6. Unité de plastification selon la revendication 5, dans laquelle la tête (18) du noyau (17) et la vis (4) présentent des moyens de liaison qui agissent pour déplacer le noyau (17) vers l'avant avec la vis (4) sous forme d'unité dès que l'avant de la vis (4) dans son mouvement d'injection avant atteint la tête (18) du noyau (17).

7. Unité de plastification selon la revendication 5, dans laquelle la tête de la vis (14) et la tête (18) du noyau (17) lorsqu'elles se déplacent vers l'avant pendant la course d'injection, sont configurées pour former une surface continue qui s'adapte sensiblement à l'extrémité de sortie de l'enceinte formant réservoir pour empêcher sensiblement tout espace mort lorsque la vis (4) se trouve à l'avant.

8. Unité de plastification selon l'une des revendications précédentes, incluant un capteur de pression (20) adapté dans l'enceinte formant réservoir pour réagir directement à une plus grande pression exerçée par le matériau après avoir rempli le volume d'injection préétabli pour démarrer le mouvement d'injection de la vis (4) afin d'éliminer tout mouvement du noyau (17) de sa position préétablie avant un début d'injection et en assurant ainsi une précision du volume d'injection.
